# FASCICULE DE BREVET EUROPEEN

(11) **EP 1 264 554 B1**
(45) Date de publication et mention de la délivrance du brevet: **26.10.2005**
(21) Numéro de dépôt: 02370024.8
(22) Date de dépôt: 27.05.2002
(51) Int. Cl.: A43B 7/12

(54) **Chaussure imperméable à semelle injectée sur tige**
Wasserdichter Schuh mit einer an das Oberleder gespritzter Sohle
Watertight shoe with a sole injected to the upper

(30) Priorité: 05.06.2001 FR 0107324
(43) Date de publication de la demande: 11.12.2002
(73) Titulaire: PROMILES, 59650 Villeneuve D'Ascq (FR)
(72) Inventeur: Labarre Stéphane, 59000 Lille (FR)
(74) Mandataire: Hennion, Jean-Claude

(56) Documents cités:
- EP-A- 0 594 029
- EP-A- 0 629 359
- WO-A-90/06067
- DE-U- 8 717 201
- DE-U- 20 001 560

## Description

La présente invention concerne le domaine des chaussures, notamment de marche, dont on recherche principalement le caractère imperméable. Elle concerne plus particulièrement une chaussure imperméable dont la semelle est réalisée par injection directe sur la tige extérieure et la doublure intérieure.

Dans le domaine des chaussures notamment de marche, il est constant de rechercher que le pied de l'utilisateur ne soit pas atteint par l'humidité, y compris en cas de stationnement dans une hauteur de l'ordre de 8 cm de haut

Dans le document FR.2.781.652, la solution proposée par la société Décathlon concerne un mode de fabrication d'une chaussure imperméable comportant une tige extérieure et un chausson intérieur selon la technique du montage soudé. Plus précisément, selon cette technique, on vient coller une première de monte sur la face inférieure du chausson, on soude sur toute sa périphérie l'extrémité libre de la tige sur la face inférieure de la première de monte et enfin, dans une étape ultime, on colle sur la partie inférieure de la tige une semelle externe rapportée constituant la semelle d'usure. Selon la solution apportée par la société Décathlon, le chausson intérieur comporte une tige imperméable à l'eau mais perméable à la vapeur d'eau et une semelle perméable aux liquides. De plus, il comporte un revêtement externe de maintien en forme qui est imperméable à l'eau, ledit revêtement recouvrant la semelle et uniquement la partie basse du chausson sur toute sa périphérie ; enfin le revêtement est choisi pour permettre de conférer aux parties ainsi recouvertes une rigidité suffisante pour les maintenir en forme tout en leur conservant une certaine souplesse.

Cette solution qui est efficace pour rendre imperméable une chaussure réalisée selon la technique à montage soudé de la semelle ne convient pas parfaitement pour les chaussures imperméables à semelle injectée sur tige.

Selon cette seconde technique, la tige extérieure et la doublure intérieure de la chaussure sont assemblées l'une à l'autre par couture sur tout le pourtour de leurs extrémités inférieures, qui correspond à la carre de forme. Une pièce textile découpée selon la planche de forme est piquée le long de cette piqûre dite de carre de forme à l'ensemble constitué de la tige extérieure et de la doublure intérieure. Une forme est placée à l'intérieur de cet ensemble avant que celui-ci ne soit introduit dans un moule, dans lequel la semelle extérieure ou semelle d'usure est injectée.

Ce mode de fabrication ne permet pas d'obtenir en l'état l'imperméabilité de la chaussure . En effet, même si la tige extérieure ou plutôt la combinaison tige extérieure/dessus du chausson intérieur est réalisée à l'aide de matériaux imperméables, on constate que l'humidité peut s'infiltrer jusqu'à atteindre la zone correspondant à l'extrémité inférieure de la tige extérieure, là où se trouvent les coutures entre la planche de forme, le dessus du chausson et la tige extérieure. Même si on prend la précaution d'utiliser à la fois pour la planche de forme et le dessus du chausson un matériau imperméable, il n'en reste pas moins vrai que ces coutures peuvent être le siège d'une infiltration de l'humidité. Cette dernière solution n'est donc pas satisfaisante.

Pour améliorer cette étanchéité, on a déjà proposé une solution qui consiste à modifier la structure du chausson intérieur de telle sorte que les sous-ensembles planche de forme et dessus du chausson ne fassent qu'un. Plus précisément, le chausson intérieur est constitué de deux pièces d'un complexe textile contenant une membrane imperméable et respirante assemblées selon une couture longitudinale en partie médiane de la longueur du pied, au niveau de la planche de forme. Ainsi, selon cette solution, la zone sensible à l'humidité que constitue cette piqûre longitudinale est plus éloignée physiquement de l'extrémité inférieure de la tige extérieure, laquelle se trouve toujours à la carre de forme. De plus une pièce textile à structure ouverte est cousue sur le chausson intérieur, ce qui assure la cohésion de l'ensemble tige extérieure / chausson intérieur lors de l'injection. Au moment de ladite injection, la matière thermoplastique injectée crée un rempart physique entre l'extrémité inférieure de la tige extérieure et le chausson intérieur, la pièce de textile à structure ouverte est totalement emprisonnée dans la matière thermoplastique et, de ce fait, l'humidité ne peut absolument pas rejoindre la zone sensible du chausson intérieur à savoir la piqûre médiane et longitudinale de la planche de forme. Ainsi la chaussure obtenue est parfaitement étanche.

Néanmoins cette solution n'est pas encore totalement satisfaisante puisqu'elle nécessite la mise en oeuvre pour l'intégralité du chausson intérieur d'un complexe textile contenant une membrane imperméable et respirante, qui est d'un coût très élevé.

Une autre solution a également déjà été proposée, selon laquelle on interpose entre le chausson intérieur et la tige extérieure une bande d'un textile grillagé, qui est piquée sur tout le pourtour inférieur de la tige extérieure et qui relie l'extrémité de la tige extérieure à la carre de forme du chausson intérieur. Cette pièce en textile grillagé crée un espacement entre la tige extérieure et le chausson intérieur. Au moment de l'injection, cette pièce en textile grillagé est emprisonnée dans la matière thermoplastique injectée de la semelle d'usure, laquelle matière crée un rempart physique entre la tige extérieure et le chausson intérieur. L'humidité ne peut donc théoriquement pas rejoindre la zone sensible du chausson intérieur, c'est-à-dire la ligne de piqûre selon la carre de forme . En pratique les résultats d'imperméabilité de cette seconde solution sont assez moyens. De plus cette solution rend encore plus complexe la fabrication de la chaussure.

Le but que s'est fixé le demandeur est de proposer une chaussure imperméable à semelle injectée sur tige qui pallie les inconvénients précités en ce qu'en particulier le sous-ensemble constituant la planche de forme peut être réalisé dans un matériau qui n'est pas nécessairement imperméable et respirant et en ce que la fabrication de la chaussure est simplifiée.

Ce but est parfaitement atteint par la chaussure imperméable de l'invention qui comprend de manière connue :
a) une tige extérieure constituée de composants traités pour l'imperméabilité,
b) un chausson intérieur constitué d'une pièce textile découpée selon la planche de forme, d'un dessus de chausson imperméable et d'un haut de tige, le chausson intérieur étant relié à la tige extérieure par piqûre au niveau du haut de tige et le dessus du chausson étant relié à la pièce textile découpée selon la planche de forme par une piqûre selon tout le pourtour de celle-ci, dénommée piqûre de carre de forme,
c) une semelle extérieure en matière thermoplastique qui est injectée dans un moule dans lequel est disposé l'ensemble assemblé tige extérieure/chausson intérieur.

De manière caractéristique selon l'invention, ladite chaussure comporte également une pièce intercalaire en matière plastique, qui est intercalée entre la tige extérieure et la piqûre de carre de forme du chausson intérieur, qui s'étend sur toute la périphérie de la piqûre de carre de forme et qui est noyée dans la matière thermoplastique de la semelle extérieure.

Contrairement à la seconde solution précitée, ainsi que celle qui est décrite dans le document EP.594.029, cette pièce intercalaire n'est pas reliée ni au chausson intérieur ni à la tige extérieure. De plus elle est elle-même en matière plastique, apte à former un rempart physique entre le chausson intérieur et la tige extérieure lors de l'opération d'injection de manière à ce que la matière thermoplastique injectée puisse se répandre autour de ladite pièce et empêcher tout contact entre la tige extérieure et le chausson intérieur, qui serait source éventuelle de diffusion de l'humidité. On obtient ainsi une chaussure parfaitement imperméable, sans qu'il soit nécessaire que la pièce textile découpée selon la planche de forme (ou semelle du chausson intérieur) soit dans un matériau imperméable à l'eau. Enfin il n'est plus besoin de réaliser, comme dans la seconde solution précitée et dans le document EP.594.029 de couture entre la tige extérieure et le chausson intérieur, préalablement à l'injection.

De préférence, la pièce intercalaire en matière plastique a une section transversale en L, la piqûre de carre de forme étant disposée dans l'angle intérieur du L . Ainsi, avec cette disposition particulière, la piqûre de carre de forme est totalement protégée par la pièce intercalaire, le montant supérieur du L venant se placer entre la tige extérieure et le dessus du chausson tandis que le montant transversal du L se place sous la pièce textile découpée selon la planche de forme.

Eventuellement, la portion de la pièce intercalaire, entre les deux montants supérieur et transversal, peut être incurvée, de manière à créer un espace intérieur plus important pour loger la piqûre de carre de forme.

Dans une version préférée, ladite pièce intercalaire est percée d'orifices permettant le passage de la matière thermoplastique lors de l'injection. Il convient en effet de rappeler que la fonction première de cette pièce intercalaire est de constituer un rempart physique entre la tige extérieure et le chausson intérieur lors de l'injection, ladite pièce étant ensuite noyée dans la matière thermoplastique injectée de telle sorte que c'est ladite matière thermoplastique qui génère le caractère imperméable de la chaussure, en empêchant tout contact entre la tige extérieure et le chausson intérieur et toute diffusion de l'humidité entre ces deux éléments.

Avantageusement, pour faciliter sa manipulation et son placement lors de la fabrication de la chaussure, la pièce intercalaire comporte des entretoises.

Par ailleurs selon le type de chaussure, la pièce intercalaire peut être soit en matière plastique souple soit éventuellement en matière plastique semi-rigide ou rigide. Dans ces derniers cas, la pièce intercalaire non seulement permet l'étanchéification de la chaussure mais elle remplit une fonction complémentaire qui est d'apporter des caractéristiques de rigidité à la semelle.

C'est un autre objet de l'invention que de proposer un procédé de fabrication d'une chaussure imperméable, à semelle injectée sur tige, spécialement conçu pour la fabrication de la chaussure précitée incorporant une pièce intercalaire.

Ce procédé consiste, de manière connue, dans les opérations suivantes :
a)on assemble une tige extérieure, constituée de composants traités pour l'imperméabilité, à un chausson intérieur constitué d'une pièce textile découpée selon la planche de forme, d'un dessus de chausson et d'un haut de tige, par piqûre au niveau du haut de tige, le dessus de chausson étant relié à la pièce textile découpée selon la planche de forme par une piqûre sur tout le pourtour de celle-ci, dénommé piqûre de carre de forme,
b)on introduit une forme dans le chausson intérieur,
c)on dispose l'ensemble assemblé tige extérieure/chausson intérieur/forme dans un moule ayant la configuration de la semelle extérieure et,
d)on injecte dans le moule une matière thermoplastique.

De manière caractéristique selon l'invention, après introduction de la forme dans le chausson intérieur, on introduit entre le bord périphérique de la tige extérieure et la piqûre de carre de forme du chausson intérieur une pièce intercalaire, s'intercalant entre la tige extérieure et le chausson intérieur sur toute la périphérie de celui-ci, ladite pièce étant noyée dans la matière thermoplastique lors de l'injection.

Dans le cas où la pièce intercalaire a une section transversale en L avec un montant supérieur et un montant transversal, ledit montant transversal est en appui sur la pièce textile découpée selon la planche de forme tandis que le montant supérieur est entre la tige extérieure et le dessus du chausson intérieur.

Afin de faciliter la mise en place de la tige extérieure et du chausson intérieur en vue de l'opération d'injection, la tige extérieure a son bord périphérique qui est équipé de moyens de blocage destinés à assurer en position active son maintien en place entre le chausson intérieur lors de l'introduction de la forme et de l'injection, lesdites moyens de blocage étant en position inactive lors de la mise en place de la pièce intercalaire.

Selon une variante préférée de réalisation, les moyens de blocage sont constitués par au moins un ruban élastique transversal et /ou longitudinal, qui est fixé à ses deux extrémités de part et d'autre du bord périphérique de la tige extérieure.

Avantageusement les moyens de blocage comprennent deux rubans élastiques transversaux.

De préférence le ou les rubans élastiques sont maintenus à distance de la pièce textile découpée selon la planche de forme, grâce à la pièce intercalaire, lors de l'injection. Cette disposition particulière permet que les rubans élastiques soient eux-mêmes noyés dans la matière plastique injectée et ne restent pas en contact direct avec la pièce textile découpée selon la planche de forme.

La présente invention sera mieux comprise à la lecture de la description qui va être faite d'un exemple préféré de réalisation d'une chaussure imperméable à semelle injectée sur tige comportant une pièce intercalaire en matière plastique en L, illustré par le dessin annexé dans lequel :
La figure 1 est une représentation schématique partielle en coupe de la chaussure imperméable au niveau de la semelle, incluant la pièce intercalaire, et
La figure 2 est une représentation schématique en plan, vue de dessous, de l'ensemble constitué par le chausson intérieur, la pièce intercalaire et la tige extérieure équipée de trois rubans élastiques de blocage.

La chaussure 1 qui va être décrite ci-après est une chaussure de marche qui résulte de l'assemblage des trois ensembles suivants à savoir une tige extérieure 2, un chausson intérieur 3 et une semelle extérieure 4.

La tige extérieure 2 est la partie de la chaussure et qui est en contact avec le milieu extérieur, constituée par exemple de pièces de cuir, de textile enduit ou non, de divers moussages, pièces de renfort... Elle est constituée, de manière connue, de matériaux spécialement traités pour être imperméables.

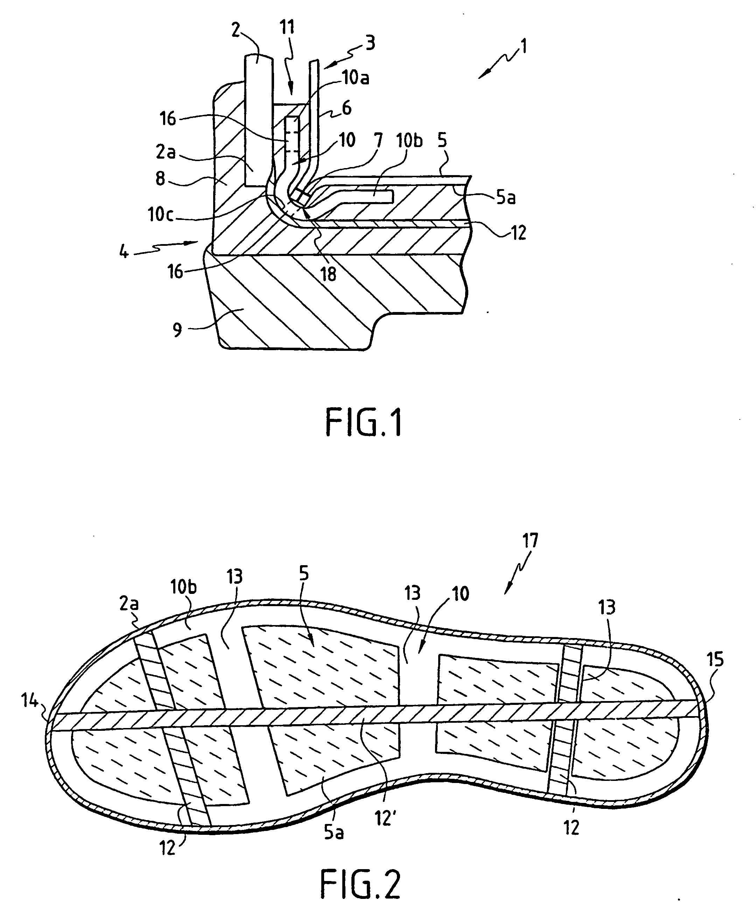

Le chausson intérieur 3 est l'ensemble qui est entièrement en contact avec le pied de l'utilisateur. Assemblé par piqûre, il est lui-même constitué de trois sous-ensembles à savoir une semelle qui est une pièce textile découpée selon la planche de forme, ladite pièce étant dénommée ci-après planche de forme 5, le dessus 6 du chausson et le haut de tige (non représenté sur la figure 1).

La planche de forme 5 n'a pas, dans le cadre de l'invention, de contrainte particulière en terme de respirabilité ou d'imperméabilité. Il est donc possible d'utiliser pour la réalisation de cette pièce un matériau très bon marché. Le dessus du chausson 6 est constitué de une ou plusieurs pièces d'un complexe textile contenant une membrane imperméable et respirante. La ou les piqûres permettant l'assemblage du dessus du chausson sont étanchées par ruban thermocollant en sorte que ce sous-ensemble soit entièrement imperméable et respirant, c'est-à-dire perméable à la vapeur d'eau.

Le haut de tige présente de préférence des caractéristiques de respirabilité mais non nécessairement d'imperméabilité à l'eau. Il est constitué d'une ou plusieurs pièces qui sont soit dans un matériau textile habituellement utilisé pour des doublures de chaussures soit en cuir.

Le dessus du chausson 6 est relié à la planche de forme 5 par une piqûre 7 selon tout le pourtour de ladite planche de forme 5, ladite piqûre étant dénommée piqûre de carre de forme.

La semelle extérieure 4 ou semelle d'usure est obtenue par l'injection d'une matière thermoplastique 8 qui est le plus souvent du polyuréthanne. Cette injection est réalisée dans un moule dans lequel l' ensemble assemblé constitué par la tige extérieure et le chausson intérieur est préalablement placé. Sur la figure 1, on a représenté une semelle extérieure 4 qui est composée non seulement de la matière plastique injectée 8 mais également d'un patin en caoutchouc 9 disposé au fond du moule avant injection, la semelle extérieure ayant dans ce cas deux composants, le contact avec le sol se faisant sur le patin en caoutchouc qui offre une meilleure adhérence et une meilleure résistance à l'abrasion.

La chaussure 1 de l'invention comporte une pièce intercalaire 10 qui est noyée dans la matière thermoplastique 8 de la semelle extérieure 4. Cette pièce 10 est une pièce monobloc en matière plastique, notamment moulée, qui est configurée pour être intercalée entre la tige extérieure 2 et le chausson intérieur 3 sensiblement au niveau de la piqûre 7 de carre de forme. La fonction impartie à cette pièce intercalaire est en premier lieu de constituer un obstacle physique empêchant le contact entre la tige extérieure 2 et le chausson intérieur 3 lors de l'opération d'injection. La matière plastique injectée 8 pénètre et occupe l'espace 11 entre la tige extérieure 2 et le chausson intérieur 3 - espace dans lequel se trouve ladite pièce intercalaire 10 - empêchant qu'une éventuelle migration d'humidité le long de la tige 2 puisse atteindre le chausson intérieur 3. De ce fait la chaussure 1 est parfaitement imperméable.

Dans l'exemple qui est illustré aux figures, des rubans élastiques 12, 12' sont cousus, par leurs deux extrémités, au bord périphérique inférieur 2a de la tige extérieure 2. Le rôle de ces rubans élastiques 12 sera compris lors de la description du procédé de fabrication de la chaussure. Sur la figure 1, on constate qu'un ruban élastique transversal 12 est noyé dans la matière thermoplastique injectée 8 et n'est donc pas en contact avec la planche de forme 5 du chausson intérieur 3.

La pièce intercalaire 10 est, dans l'exemple illustré à la figure 1, une pièce qui a une section transversale globalement en L, avec un montant supérieur 10a qui s'étend entre la tige extérieure 2 et le dessus du chausson 6 tandis que le montant transversal 10b s'étend en-dessous de la planche de forme 5. La portion 10c de la plaque intercalaire 11 relie le montant supérieur 10a et le montant transversal 10b à une forme incurvée, convexe, dont l'espace intérieur 13 fait office de logement à la partie du chausson 3 correspondant à la piqûre 7 carre de forme. Cette configuration n'est pas exclusive de l'invention, la pièce intercalaire 10 pouvant avoir une simple forme en L, en équerre, voire même pouvant être simplement de forme rectiligne en section transversale, correspondant au montant supérieur 10a, en sorte que celui-ci se prolonge au-delà de la piqûre de carre 7. Cependant la forme en L ci-dessus facilite la mise en oeuvre de la pièce intercalaire 10 lors de la fabrication de la chaussure 1.

Dans l'exemple illustré à la figure 2, la pièce intercalaire 10 comporte trois entretoises 13 consistant dans des prolongements des montants transversaux 10b. Ces entretoises 13 ont pour but d'augmenter la rigidité de la pièce intercalaire 10 lorsque celle-ci est réalisée dans un matériau souple, ce qui facilite sa manipulation lors de la fabrication de la chaussure 1.

Dans ce même exemple illustré à la figure 2, ce sont trois rubans élastiques 12,12' qui sont reliés, par leurs deux extrémités, au bord périphérique inférieur 2a de la tige extérieure 2. Il s'agit d'un ruban longitudinal 12' dont les extrémités sont cousues respectivement aux pointes avant 14 et arrière 15 du bord 2a de la tige extérieure 2, ledit ruban ayant sensiblement la direction longitudinale de la chaussure.

Les deux autres rubans 12 sont disposés sensiblement transversalement au ruban longitudinal 12', étant situés à une distance de l'ordre de 5cm respectivement des pointes avant 14 et arrière 15 précitées.

Pour la fabrication de la chaussure, la tige extérieure 2 est assemblée par piqûre au chausson intérieur 3 au niveau du haut de tige. On introduit dans le chausson intérieur 3 une forme c'est-à-dire une pièce ayant une configuration intérieure qui est conforme à celle que l'on cherche à obtenir pour l'espace intérieur de la chaussure, pour le confort du pied de l'utilisateur. C'est par analogie avec cette forme que la semelle du chausson intérieur est dénommée planche de forme 5 et que la piqûre reliant la planche de forme 5 au-dessus du chausson 6 est dénommée piqûre 7 de carre de forme. L'opération suivant l'introduction de la forme dans le chausson intérieur va consister dans l'introduction de la pièce intercalaire 10 entre d'une part le bord inférieur 2a de la tige extérieure 2 et d'autre part le chausson intérieur 3. Cependant cette opération n'est pas immédiatement possible du fait de la présence des rubans élastiques 12, 12' qui s'étendent d'un bord à l'autre de la tige extérieure 2 par dessus la face inférieure 5a de la planche de forme 5. Il faut donc préalablement écarter les rubans élastiques 12, 12' de manière à laisser le passage pour la pièce intercalaire 10 jusqu'à obtenir son placement par emboîtement, selon lequel le montant supérieur 10a est intercalé entre la tige extérieure 2 et le dessus du chausson 6. Ce placement est facilité du fait que le montant transversal 10b de la pièce intercalaire 10 vient alors en appui sur la planche de forme 5 qui est elle-même en appui sur la forme qui se trouve à l'intérieur du chausson intérieur 3.

En théorie il faudrait, pour chaque taille de chaussure 1, une pièce intercalaire 10 de dimension appropriée. Cependant lorsqu'on met en oeuvre, pour la pièce intercalaire 10, un matériau plastique souple, celui-ci peut subir une certaine déformation permettant qu'une même pièce intercalaire 10 puisse être utilisée pour plusieurs tailles de chaussure 1. En effet la pièce intercalaire est, après injection, maintenue dans sa configuration initiale, même si elle est légèrement étirée.

Une fois la pièce intercalaire 10 mise en place, les rubans élastiques 12, 12' sont également remis dans leur position initiale, comme cela est illustré à la figure 2. Lesdits rubans élastiques 12, 12', grâce à la tension qu'ils exercent sur la tige extérieure 2, permettent d'obtenir un positionnement précis de ladite tige par rapport à la pièce intercalaire 10 d'une part et par rapport au chausson intérieur 3 d'autre part, sans avoir à recourir à des moyens de liaison définitifs comme des coutures.

Il est à noter que les rubans élastiques 12, 12' ne sont pas directement en appui contre la face inférieure 5a de la planche de forme 5 mais s'appuient au contraire sur la pièce intercalaire 10 qui elle-même s'appuie sur la planche de forme 5. Il y a donc nécessairement un espace entre les rubans élastiques 12, 12' et la face inférieure 5a de ladite planche de forme 5.

Dans la plaque intercalaire 10 sont prévus des orifices débouchant 16, notamment à travers le montant supérieur 10a ou à travers la portion incurvée 10c. Eventuellement ces orifices ont une inclinaison oblique, dans le sens de la direction de l'injection de la matière plastique, de manière à faciliter le passage de celle-ci d'une face à l'autre de la pièce intercalaire 10. Ces orifices sont, en tout état de cause, suffisamment petits pour ne pas permettre le contact direct entre la tige extérieure 2 et le chausson intérieur 3. Ils servent uniquement à favoriser l'écoulement de la matière thermoplastique au moment de l'injection.

L'ensemble 17 tel que préparé et montré sur la figure 2 est placé dans le moule d'injection, qui a la forme souhaitée pour la semelle extérieure 4. Eventuellement, comme illustré à la figure 1, un patin en caoutchouc 9 déjà formé est placé au fond du moule en sorte de former une semelle extérieure 4 bi-composant, chaque composant ayant sa propre densité et ses propres caractéristiques techniques. Bien sûr les composants sont déterminés pour qu'il y ait une liaison forte entre eux, afin d'éviter qu'il puisse y avoir, lors de l'utilisation de la chaussure 1, un délaminage de la matière injectée 8 et du patin 9.

Lors de l'injection, comme illustrée à la figure 1, la matière thermoplastique, notamment en polyuréthanne, injectée dans le moule diffuse entre la tige extérieure 2 et le chausson intérieur 3, y compris dans les espaces entre la pièce intercalaire 10 et ces deux constituants 2, 3. La pièce intercalaire 10 est alors noyée dans la masse de la matière plastique injectée 8, de même que les rubans élastiques 12, 12'. La présence des orifices 16 dans la pièce intercalaire 10 a permis de faciliter cette diffusion homogène.

Pour plus de sécurité, la pièce intercalaire 10 remonte au moins 5mm au-dessus de la piqûre 7 de carre de forme sur tout le pourtour du chausson 3 ; de plus elle recouvre au moins 5 mm de la planche de forme 5 en partant de la piqûre 7 du carre de forme et également sur tout le pourtour de celle-ci.

Il est cependant à noter que ce mode de réalisation préféré n'est pas le seul qui puisse permettre d'atteindre l'objectif visé à savoir qu'il n'y ait à aucun moment contact entre la tige extérieure 2 et le chausson 3, avant, pendant et après l'injection, de manière à ce que l'humidité susceptible de diffuser le long de la tige extérieure 2 ne puisse atteindre la zone critique à savoir la piqûre 7 de carre de forme. C'est dans ces conditions que le matériau constituant la plaque de forme 5 peut ne comporter aucune caractéristique d'imperméabilité à l'eau, puisque l'humidité ne pourra pas parvenir jusqu'à ladite plaque de forme 5.

Comme vu ci-dessus, la réalisation de la pièce intercalaire 10 dans une matière plastique souple peut présenter un avantage du fait de sa capacité d'être utilisée pour des tailles de chaussure différentes. Cependant il peut être également intéressant de réaliser cette même pièce 10 dans une matière semi-rigide voire rigide, selon que l'on cherche à apporter à la semelle 4 des caractéristiques complémentaires de rigidité, selon le type de chaussure. Dans ce cas bien sûr la configuration de la pièce intercalaire et notamment sa section transversale seront adaptées en fonction du résultat recherché. Ainsi une même pièce intercalaire 10 peut remplir deux fonctions, l'une d'étanchéification et l'autre de rigidification, cette dernière fonction pouvant être remplie au lieu et place d'insert ou autre organe de rigidification connu par ailleurs.

## Revendications

1. Chaussure imperméable à semelle injectée sur tige comprenant :
a) une tige extérieure (2) constituée de composants traités pour l'imperméabilité,
b) un chausson intérieur (3) constitué d'une pièce textile, découpée selon la planche de forme et dénommée elle-même planche de forme (5), d'un dessus de chausson imperméable (6) et d'un haut de tige, le chausson intérieur (3) étant relié à la tige extérieure (2) par piqûre au niveau du haut de tige et le dessus du chausson (6) étant relié à la planche de forme (5) par une piqûre selon tout le pourtour de celle-ci, dénommée piqûre de carre de forme,
c) une semelle extérieure (4) en matière thermoplastique qui est injectée dans un moule dans lequel est disposé l'ensemble assemblé tige extérieure (2)/chausson intérieur (3),
**caractérisé en ce qu'**elle comporte également une pièce intercalaire (10) en matière plastique, qui est intercalée entre la tige extérieure (2) et la piqûre (7) de carre de forme du chausson intérieur (3), qui s'étend sur toute la périphérie de la piqûre (7) de carre de forme et qui est noyée dans la matière thermoplastique (8) de la semelle extérieure (4).

2. Chaussure selon la revendication 1 **caractérisée en ce que** la pièce intercalaire (10) en matière plastique a une section transversale en L, la piqûre (7) de carre de forme étant disposée dans l'angle intérieur du L.

3. Chaussure selon la revendication 2 **caractérisée en ce que** la portion (10c) de la pièce intercalaire (10), entre les deux montants supérieur (10a) et transversal (10b) du L est incurvée, de manière à créer un espace intérieur (13) pour loger la piqûre (7) de carre de forme.

4. Chaussure selon l'une des revendications 1 à 3 **caractérisée en ce que** ladite pièce intercalaire (10) est percée d'orifices (16) permettant le passage de la matière thermoplastique (8) lors de l'injection.

5. Chaussure selon l'une des revendications 1 à 4 **caractérisée en ce que** la pièce intercalaire (10) comporte des entretoises (13).

6. Chaussure selon l'une des revendications 1 à 5 **caractérisée en ce que** la pièce intercalaire est en matière plastique souple.

7. Chaussure selon l'une des revendications 1 à 5 **caractérisée en ce que** la pièce intercalaire est en matière plastique semi-rigide ou rigide.

8. Procédé de fabrication d'une chaussure imperméable, à semelle injectée sur tige, spécialement conçu pour la fabrication de la chaussure selon la revendication 1 consistant dans les opérations suivantes :
a) on assemble une tige extérieure (2) constituée de composants traités pour l'imperméabilité à un chausson intérieur (3) constitué d'une pièce textile dénommée planche de forme (5) et découpée selon la planche de forme, d'un dessus de chausson (6) et d'un haut de tige, par piqûre au niveau du haut de tige, le dessus de chausson (6) étant relié à la planche de forme (5) par une piqûre sur tout le pourtour de celle-ci, dénommé piqûre (7) de carre de forme,
b) on introduit une forme dans le chausson intérieur (3),
c) on dispose l'ensemble assemblé tige extérieure (2)/chausson intérieur (3) /forme dans un moule ayant la configuration de la semelle extérieure (4) et,
d) on injecte dans le moule une matière thermoplastique (8)
**caractérisé en ce que**, après introduction de la forme dans le chausson intérieur (3), on introduit entre le bord périphérique (2a) de la tige extérieure (2) et la piqûre (7) de carre de forme du chausson intérieur (3) une pièce intercalaire (10), s'intercalant entre la tige extérieure (2) et le chausson intérieur (3) sur toute la périphérie de celui-ci, ladite pièce (7) étant noyée dans la matière thermoplastique (8) lors de l'injection.

9. Procédé selon la revendication 8 **caractérisé en ce que**, la pièce intercalaire (10) ayant une section transversale en L avec un montant supérieur (10a) et un montant transversal (10b), lors de l'introduction de ladite pièce (10), ledit montant transversal (1 Ob) est en appui sur la planche de forme (7) tandis que le montant supérieur (10a) est entre la tige extérieure (2) et le dessus du chausson intérieur (3).

10. Procédé selon l'une des revendications 8 ou 9 **caractérisé en ce que** la tige extérieure (2) ayant son bord périphérique (2a) qui est équipé de moyens de blocage destinés à assurer en position active son maintien en place contre le chausson intérieur (3) lors de l'introduction de la forme et de l'injection, lesdits moyens de blocage sont en position inactive lors de la mise en place de la pièce intercalaire (10).

11. Procédé selon la revendication 10 **caractérisé en ce que** les moyens de blocage sont constitués par au moins un ruban élastique transversal et/ou longitudinal (12,12'), qui est fixé à ses deux extrémités de part et d'autre du bord périphérique (2a) de la tige extérieure (2).

## Patentansprüche

1. Wasserundurchlässiger Schuh mit Spritzsohle auf einem Schaft, umfassend:
a) einen äußeren Schaft (2), bestehend aus Bestandteilen, die zur Wasserundurchlässigkeit behandelt sind,
b) einen Innenschuh (3), bestehend aus einem Textilteil, das gemäß einer Formplatte zugeschnitten ist und das selbst als Formplatte (5) bezeichnet wird, einem wasserundurchlässigen Innenschuhoberteil (6) und einem Schaftoberteil, wobei der Innenschuh (3) mit dem äußeren Schaft (2) durch eine Naht auf der Ebene des Schaftoberteils verbunden ist und wobei das Innenschuhoberteil (6) mit der Formpiatte (5) durch eine Naht entlang der Außenlinie von jener verbunden ist, welche Vierkantnaht genannt wird;
c) eine Außensohle (4) aus thermoplastischem Material, die in eine Form gespritzt wird, in welcher die zusammengesetzte Anordnung äußerer Schaft (2)/Innenschuh (3) angeordnet ist,
**dadurch gekennzeichnet,**
**daß** er ferner ein Einlagestück (10) aus Kunststoffmaterial umfaßt, das zwischen dem äußeren Schaft (2) und der Vierkantnaht (7) des Innenschuhs (3) eingelegt ist, welche sich über den gesamten Umfang der Vierkantnaht (7) erstreckt und welche in das thermoplastische Material (8) der Außensohle (4) eingelassen ist.

2. Schuh nach Anspruch 1, **dadurch gekennzeichnet, daß** das Einlagestück (10) aus Kunststoffmaterial einen L-förmigen Querschnitt hat, wobei die Vierkantnaht (7) in dem Innenwinkel des L angeordnet ist.

3. Schuh nach Anspruch 2, **dadurch gekennzeichnet, daß** der Teil (10c) des Einlagestücks (10) zwischen den beiden Hoch- (10a) und Querausstrebungen (10b) des L derart gekrümmt ist, daß ein Innenraum (13) erzeugt wird, um die Vierkantnaht (7) aufzunehmen.

4. Schuh nach einem der Ansprüche 1 bis 3, **dadurch gekennzeichnet, daß** das Einlagestück (10) mit Öffnungen (16) durchstochen ist, die den Durchgang des thermoplastischen Materials (8) bei der Einspritzung erlauben.

5. Schuh nach einem der Ansprüche 1 bis 4, **dadurch gekennzeichnet, daß** das Einlagestück Stege (13) umfaßt.

6. Schuh nach einem der Ansprüche 1 bis 5, **dadurch gekennzeichnet, daß** das Einlagestück aus elastischem Kunststoffmaterial besteht.

7. Schuh nach einem der Ansprüche 1 bis 5, **dadurch gekennzeichnet, daß** das Einlagestück aus halbstarrem oder starrem Kunststoffmaterial besteht.

8. Verfahren zur Herstellung eines wasserundurchlässigen Schuhs mit Spritzsohle auf einem Schaft, speziell vorgesehen zur Herstellung des Schuhs gemäß Anspruch 1, bestehend aus den folgenden Vorgängen:
a) man setzt einen äußeren Schaft (2), bestehend aus zur Wasserundurchlässigkeit behandelten Bestandteilen an einen Innenschuh (3), der aus einem Textilteil besteht, genannt Formplatte (5), und der gemäß der Formplatte geschnitten ist, ein Schuhoberteil (6) und ein Schaftoberteil durch Einstechen auf dem Niveau des Schaftoberteils zusammen, wobei das Innenschuhoberteil (6) mit der Formplatte (5) durch eine Naht über die gesamte Kontur von jenem verbunden wird, die Vierkantnaht (7) genannt wird,
b) man führt eine Form in den Innenschuh (3) ein,
c) man ordnet die zusammengesetzte Anordnung äußerer
Schaft (2)/Innenschuh (3)/Form in einer Form mit der Konfiguration der Außensohle (4) an und
d) man spritzt in die Form ein thermoplastisches Material (8) ein,
**dadurch gekennzeichnet,**
**daß** man nach Einführung der Form in den Innenschuh (3) zwischen dem Außenrand (2a) dem äußeren Schaft (2) und der quadratischen Naht (7) des Innenschuhs (3) ein Einlagestück (10) einführt, welches sich zwischen dem äußeren Schaft (2) und dem Innenschuh (3) über den gesamten Umfang von jenem einfügt, wobei das Stück (7) in das thermoplastische Material (8) beim Einspritzen eingelassen ist.

9. Verfahren nach Anspruch 8, **dadurch gekennzeichnet, daß** das Einlagestück (10) einen L-förmigen Querschnitt hat mit einer Hochausstrebung (10a) und einer Querausstrebung (10b) und daß beim Einführen des Stückes (10) die Querausstrebung (10b) gestützt ist auf die Formplatte (7) während die Hochausstrebung (10a) zwischen dem Außenschaft (2) und über dem Oberteil des Innenschuhs (3) liegt.

10. Verfahren nach einem der Ansprüche 8 oder 9, **dadurch gekennzeichnet, daß**, der äußere Schaft (2) seinen Außenrand (2a) hat, der mit Blocklermitteln versehen ist, die dazu vorgesehen sind, in aktiver Position sein Am-Platz-Halten gegenüber dem Innenschuh (3) beim Einführen der Form und der Einspritzung sicherzustellen, wobei die Blockiermittel beim Plazieren des Einlagestücks (10) in inaktiver Position sind.

11. Verfahren nach Anspruch 10, **dadurch gekennzeichnet, daß** die Blockiermittel aus wenigstens einem elastischen Quer- und/oder Längsband (12, 12') bestehen, das an seinen beiden Enden beiderseits des Außenrands (2a) des äußeren Schafts (2) befestigt ist.

## Claims

1. Waterproof shoe with sole injected onto the upper which is made up of:
a) an external upper (2) made up of components that are treated in order to make them waterproof,
b) a liner sock (3) made up of a textile component, cut to match a last-board and itself called a last-board (5), a waterproof upper sock (6) and a top band, with the internal sock (3) being connected to the external upper (2) by stitching at the top band and with the upper part of the sock (6) being connected to the last-board (5) by stitching around its entire circumference, called the last-edge stitching,
c) an external sole (4) made of thermoplastic material which is injected into a mould, into which the assembled external upper (2)/internal sock (3) are assembled, **characterised by** the fact that it also includes a spacing piece (10) made of plastic material, which is inserted between the external upper (2) and the stitching (7) of the last-edge of the internal sock (3), which extends over the entire circumference of the stitching (7) of the last-edge and which is embedded in the thermoplastic material (8) of the external sole (4).

2. Shoe as described in claim 1 **characterised by** the fact that the spacing piece (10) made of plastic material has an L-shaped transverse section, with the last-edge stitching (7) being located in the internal angle of this L.

3. Shoe as described in claim 2, **characterised by** the fact that the part (10c) of the spacer piece (10) between the two upper (10a) and transverse (10b) uprights of the L is dished, so as to create an internal space (13) to house the last-edge stitching (7).

4. Shoe as described in claims 1 to 3 **characterised by** the fact that the aforementioned spacing piece (10) is pierced with holes (16) which allow thermoplastic material (8) to pass through during injection.

5. Shoe as described in any of claims 1 to 4, **characterised by** the fact that the spacing piece (10) has cross-pieces (13).

6. Shoe as described in any of claims 1 to 5, **characterised by** the fact that the spacing piece is made of flexible plastic.

7. Shoe as described in any of claims 1 to 5, **characterised by** the fact that the spacing piece is made of semi-rigid or rigid plastic.

8. Process for manufacturing a waterproof shoe, with a sole injected onto the upper, which has been especially designed for the manufacture of the shoe as described in claim 1 and which involves the following operations:
a) an external upper (2) made up of components that are treated so as to be waterproof is assembled onto an internal sock (3) made up of a textile component called the last-board (5) which is cut to the shape of the last-board, a sock upper part (6) and a top band by means of stitching at the top band, with the sock upper (6) being connected to the last-board (5) by stitching around its entire edge, called the last-edge stitching (7).
b) a last is introduced into the internal sock (3),
c) the assembled external upper (2) / internal sock (3) assembly is arranged in a mould which has the configuration of the external upper (4) and,
d) thermoplastic material (8) is injected into the mould (8) which is **characterised by** the fact that after the last is introduced into the internal sock (3), a spacer piece (10) is introduced between the outer edge (2a) of the external upper (2) and the stitching (7) of the internal sock (3), which is inserted between the external upper (2) and the internal sock (3) over the entire circumference of the latter, with the aforementioned piece (7) being embedded in the thermoplastic material (8) during injection.

9. Process as described in claim 8 **characterised by** the fact that for the spacing piece (10) which has a transverse L-shaped section with an upper (10a) and transverse (10b) upright, during the introduction of the aforementioned piece (10), the aforementioned transverse upright (10b) rests on the last-board (5) whilst the upper upright (10a) is between the external upper (2) and the internal sock upper (3).

10. Process as described in one of claims 8 or 9 **characterised by** the fact that for the external upper (2), whose outer edge (2a) is equipped with fixing devices which ensure in an active position that it is kept in place against the internal sock (3) during the introduction of the last and during injection, the aforementioned fixing devices are in an inactive position during the installation of the spacer piece (10).

11. Process as described in claim 10 **characterised by** the fact that the fixing devices are made up of at least one transverse elastic tape and/or longitudinal tape (12,12') which is/are fixed at both ends to each end of the outer edge (2a) of the external upper (2).
